Europäisches Patentamt

European Patent Office

Office européen des brevets

(19)

(11) **EP 0 639 805 B1**

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(51) Int Cl.$^6$: **G05B 1/00**, G05B 19/418, G05B 19/4155

(21) Anmeldenummer: **93113343.3**

(22) Anmeldetag: **20.08.1993**

(54) **Verfahren zur numerischen Steuerung von mehrachsigen kinematischen Systemen**

Numerical control method for kinematic systems with multiple axis

Méthode de commande numérique pour systèmes cinématiques à plusieurs axes

(84) Benannte Vertragsstaaten:
**DE IT SE**

(43) Veröffentlichungstag der Anmeldung:
**22.02.1995 Patentblatt 1995/08**

(73) Patentinhaber:
- **SIEMENS AKTIENGESELLSCHAFT**
  **80333 München (DE)**
- **KUKA Roboter GmbH**
  **86165 Augsburg (DE)**

(72) Erfinder:
- **Olomski, Jürgen Dr.-Ing.**
  **D-91704 Herzogenaurach (DE)**
- **Liepert, Bernd, Dipl.-Math.**
  **D-86405 Meitingen (DE)**
- **Postenrieder, Eduard, Dipl.-Ing.**
  **D-86438 Kissing (DE)**

(74) Vertreter: **Lichti, Heiner, Dipl.-Ing. et al**
**Patentanwälte,**
**Dipl.-Ing. Heiner Lichti,**
**Dipl.-Phys. Dr. rer. nat. Jost Lempert,**
**Dipl.-Ing. Hartmut Lasch,**
**Postfach 41 07 60**
**76207 Karlsruhe (DE)**

(56) Entgegenhaltungen:
**EP-A- 0 172 486**          **EP-A- 0 381 185**
**US-A- 5 020 001**

- **ROBOTERSYSTEME Bd. 3, Nr. 2 , 1987 , BERLIN DE Seiten 107 - 113 DUELEN G. ET AL. 'Automatische Bewegungssynthese für bahnbezogen kooperiende Industrieroboter'**

**Beschreibung**

Bei der Bearbeitung von Werkstücken durch einen mehrachsigen Roboter kann es vorkommen, daß das Werkstück so groß ist, das ein Teil der Arbeitspunkte außerhalb des Arbeitsbereichs des Roboterwerkzeugs liegt. In diesem Fall muß entweder der Roboter näher zum Werkstück oder das Werkstück näher zum Roboter gebracht werden. Diese Veränderung der Relativposition zwischen Werkstück und Roboter muß dann in der Robotersteuerung entsprechend berücksichtigt werden, damit die geplante Arbeitsbahn wieder exakt abgefahren wird.

Aus der europäischen Patentanmeldung 0 158 447 ist ein Robotersteuerungssystem bekannt, bei dem die Positionsänderung des Werkstücks relativ zum Roboter dadurch erreicht wird, daß das Werkstück auf einem Drehtisch befestigt ist, so daß die außerhalb des Arbeitsbereichs des Roboters liegenden Arbeitspunkte in den Arbeitsbereich gedreht werden können. Die geänderten Winkelstellungen werden dann in die Transformationsgleichungen des Achskoordinatensystems des Roboters übernommen und dort entsprechend berücksichtigt.

Bei einem anderen Einsatzbereich befindet sich das vom Roboter zu bearbeitende Werkzeug zwar innerhalb des Arbeitsbereichs des Roboters, ist aber geometrisch so gestaltet, daß der Roboter bedingt durch seinen eigenen geometrischen Aufbau bestimmte Arbeitspunkte des Werkstückes trotzdem nicht erreichen kann, oder wenn doch, daß solche Achswinkelstellungen eingenommen werden müssen, die eine größere Positionierungenauigkeit mit sich bringen. In diesen und weiteren, dem Fachmann geläufigen Anwendungsfällen ist es zweckmäßig, das Werkstück jeweils optimal zum Roboter auszurichten.

Aus der europäischen Patentanmeldung 0 271 691 ist ein Robotersteuerungsverfahren bekannt, bei dem die Ebene eines Drehtisches um eine horizontale Achse geschwenkt werden kann. Das Verfahren erlaubt es, sowohl translatorisch und/oder rotatorisch bewegte als auch unbewegte Werkstücke mit ortsfesten oder mobilen Robotern zu bearbeiten. Dabei wird die Eigenbewegung des Werkstücks programm-, steuerungs- und regelungstechnisch vom Roboter berücksichtigt, indem die Achsen des Werktisches als zusätzliche Roboterachsen fingiert werden und über eine Transformationsbedingung unmittelbar in das Roboterkoordinatensystem übertragen werden.

Das zuletzt genannte Verfahren ermöglicht bereits eine schnelle, zeitsynchrone Bearbeitung von Werkstücken von zwei sich bewegenden kinematischen Systemen, dem Roboter und dem Werktisch. Durch die Einbeziehung der Werktischachsen als Zusatzachsen in das Achssystem des Roboters besteht jedoch eine enge Kopplung an die Robotersteuerung. Die Werktischachsen sind steuerungstechnisch quasi an die eigentlichen Roboterachsen angebunden und können nicht ohne diese als eigenständiges kinematisches System betrachtet werden. Es besteht also eine enge Bindung an die eigentliche Roboterkinematik und damit an den speziellen Einsatzfall Roboter gegenüber Werktisch.

Aus dem Artikel "Automatische Bewegungssynthese für bahnbezogene kooperierende Industrieroboter" von G. Duelen et al., in Robotersysteme, Bd. 3, Nr. 2, 1987, Berlin, DE, ist ein Planungsmodul bekannt, das eine automatische allgemeingültige Bewegungssynthese für bahnbezogen kooperierende kinematische Systeme ermöglicht.

Von modernen Robotersteuerungssystemen wird jedoch zunehmend eine größere Flexibilität erwartet. Der Roboter soll sich dabei zu beliebigen kinematischen Systemen relativ bewegen lassen also beispielsweise zu einem weiteren Roboter, zu einem fahrerlosen Transportsystem, einem Drehtisch, einer Hubvorrichtung etc., und vor allen Dingen soll sich das Verhältnis von Roboter als Werkzeugträger zu den übrigen Systemen, die als Werkstückträger dienen, ohne weiteres umkehren lassen, so daß der Roboter das Werkstück halt und sich das Werkzeug an einem anderen kinematischen System befindet.

Aufgabe der Erfindung ist es daher, ein Verfahren zu erhalten, mit dem beliebige kinematische Systeme relativ zueinander gesteuert werden können.

Diese Aufgabe wird durch ein Verfahren zur numerischen Steuerung von mehrachsigen kinematischen Systemen mit folgenden Merkmalen gelöst.

1.1 jedes kinematische System weist ein End- und ein Anfangskoordinatensystem (KR) auf und ist hierzwischen durch eine zeitvariante Transformationsmatrix zu jedem Taktzeitpunkt der numerischen Steuerung beschreibbar,

1.2 hintereinanderliegende kinematische Systeme können zu einer kinematischen Kette gekoppelt werden, wobei eine kinematische Kette durch die Transformationsmatrix von End- zu Anfangskoordinatensystem dieser Kette, die sich aus der mathematischen Verknüpfung der Transformationsmatrizen der hintereinanderliegenden kinematischen Systeme dieser Kette ergibt, zu jedem Taktzeitpunkt einer numerischen Steuerung beschreibbar ist,

1.3 alle kinematischen Ketten beziehen sich auf ein gemeinsames Weltkoordinatensystem,

1.4 bezüglich eines Endkoordinatensystems einer zweiten kinematischen Kette wird eine beliebige räumliche Bahn bestehend aus Position und Orientierung definiert, die vom Endkoordinatensystem einer ersten kinematischen Kette, abgefahren wird, wobei die definierte Bahn, sowie die erste und zweite kinematische Kette gemeinsam eine geschlossene kinematische Kette bilden,

1.5 bis auf ein kinematisches System dieser geschlossenen kinematischen Kette werden alle anderen unabhängig voneinander bewegt, während das übrige kinematische System, mit der notwendigen Anzahl von Freiheitsgraden, derart bewegt wird, daß die definierte Bahn des Endkoordinatensystems der ersten kinematischen Kette bezogen auf das Endkoordinatensystem der zweiten kinematischen Kette in jedem Taktzeitpunkt der numerischen Steuerung eingehalten wird.

Unabhängige Bewegung von kinematischen Systemen bedeutet hierbei, daß diese Systeme die Bewegung anderer Systeme nicht kinematisch berücksichtigen, d. h. insbesondere auch nicht einer gemeinsamen Koordinatentransformation unterliegen. Die Bewegung kann jedoch aufgrund einer gemeinsamen Steueranweisung ausgelöst sein und sie kann auch zeitsynchron zu der Bewegung anderer kinematischer Systeme sein.

Die Anzahl der Freiheitsgrade des kinematischen Systems, das die resultierende Bewegung zur Einhaltung der gewünschten Bahn ausführen muß, muß mit der Anzahl der gewünschten Freiheitsgrade der Bewegung übereinstimmen. D. h.: weist die gewünschte Bewegung alle sechs Freiheitsgrade für Lage und Orientierung auf, so muß ein kinematisches System mit sechs Freiheitsgraden die Ausgleichsbewegung ausführen.

Das Verfahren ermöglicht, daß jedes kinematische System in der geschlossenen kinematischen Kette durch Wechsel der beschreibenden Transformationsmatrix ausgetauscht werden kann, ohne daß die anderen kinematischen Systeme in ihren Transformationen dieses berücksichtigen müssen.

Vorteilhafte Ausbildungen der Erfindung sind in den Unteransprüchen definiert und werden im folgenden anhand eines Ausführungsbeispiels näher beschrieben. Dabei zeigen:

FIG 1    einen 6achsigen Roboter,
FIG 2    die kinematische Kette eines Roboters im Roboterkoordinatensystem,
FIG 3    die kinematische Kette eines Roboters mit Werkzeug, Verfahrwagen und Werkstücktisch im Weltkoordinatensystem,
FIG 4    die Beziehung zwischen aufeinanderfolgenden kinematischen Systemen im Weltkoordinatensystem,
FIG 5    die Umkehr der kinematischen Kette gemäß FIG 3 zur greiferbezogenen Interpolation.

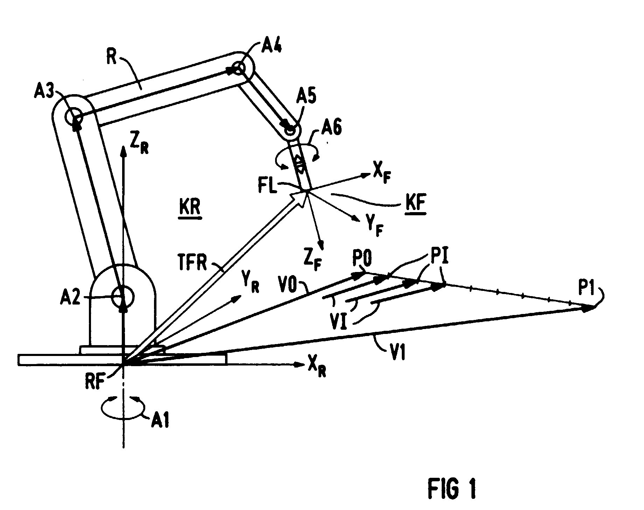

Anhand von FIG 1 soll die kinematische Kette eines Roboters mit den Achsen A1...A6 erläutert werden. Der Flansch FL des Roboters soll eine beliebig im Raum befindliche Strecke von P0 bis P1 abfahren und dabei eine gewünschte Orientierung einnehmen. Die Strecke P0 bis P1 und die auf der Strecke einzunehmende Orientierung wird bezüglich eines kartesischen Roboterkoordinatensystems KR mit den Koordinatenachsen $X_R$, $Y_R$, $Z_R$, dessen Ursprung mit dem Roboterfußpunkt RF zusammenfällt, durch die Interpolationsmatrizen V0 und V1 beschrieben. Diese Matrizen werden der Robotersteuerung vorgegeben, wobei vom Interpolator der Steuerung die zwischen den Punkten P0 und P1 liegenden Interpolationspunkte PI und die gewünschte Orientierung berechnet werden. In der Robotersteuerung werden die durch die Interpolationsmatrizen V0 ... VI ... V1 beschriebenen kartesischen Koordinaten, die die Position eines Raumpunktes und die gewünschte Orientierung des Roboterflansches FL beinhalten, in entsprechende Winkelstellungen der Roboterachsen A1 bis A6 umgerechnet und eingestellt, so daß der Ursprung des im Roboterflansch liegenden Flanschkoordinatensystems KF mit den Koordinatenachsen $X_F$, $Y_F$, $Z_F$ die jeweiligen aktuellen Raumpunkte P0, PI, P1 abfährt und die gewünschte Orientierung eingehalten wird. Damit wird die kinematische Kette zwischen den Achswinkelstellungen des Roboters und den jeweiligen Interpolationsmatrizen V0, VI, V1 zum Roboterfußpunkt RF zu jedem Taktzeitpunkt der Steuerung geschlossen. Zwischen dem Flanschkoordinatensystem KF und den Roboterkoordinatensystem KR liegt die zeitvariante Transformationsmatrix TFR (offener Pfeil). Die Umrechnung von TFR in die Achswinkelstellungen A1 bis A6 und umgekehrt wird durch die bekannten Verfahren der Roboterkoordinatentransformation vorgenommen.- Zeitvariante Transformationsmatrizen werden im folgenden durch offene Pfeile, zeitinvariante durch Pfeile mit doppelter Strichstärke und die Interpolationsmatrix durch einen Pfeil mit normaler Strichstärke dargestellt.

Wie zu erkennen ist, ist die gemäß FIG 1 dargestellte kinematische Kette, die eine herkömmliche Robotersteuerung kennzeichnet, äußerst unflexibel, da bei veränderten Bedingungen, sei es, daß die Kurve P0 bis P1 eine andere Lage im Raum einnimmt, ein Werkzeug am Roboter befestigt wird oder der Roboter an einem anderen Ort aufgestellt wird, der Roboter dafür neu programmiert bzw. geteacht werden muß, um die gleiche Bahn wieder abfahren zu können.

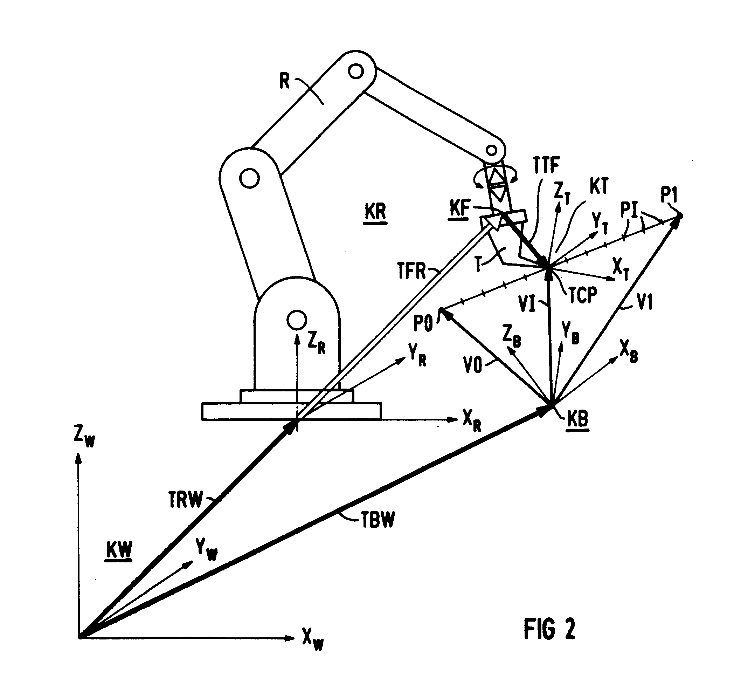

Einen Schritt in Richtung größerer Flexibilität geht bereits das anhand von FIG 2 nachfolgend beschriebene Steuerungssystem. Hier wird ein Weltkoordinatensystem KW mit den Koordinatenachsen $X_W$, $Y_W$, $Z_W$, ein Basiskoordinatensystem KB mit den Koordinatenachsen $X_B$, $Y_B$, $Z_B$ und ein Werkzeugkoordinatensystem KT mit den Koordinatenachsen $X_T$, $Y_T$, $Z_T$ eingeführt. Das Roboterkoordinatensystem KR und das Basiskoordinatensystem KB beziehen sich auf das Weltkoordinatensystem KW. Hierzwischen liegen die zeitinvarianten Transformationsmatrizen TRW bzw. TBW, die als Pfeil (doppelte Strichstärke) eingezeichnet sind. Der Ursprung des Werkzeugkoordinatensystems KT liegt in der Werkzeugspitze TCP Tool-Center Point. Zwischen Werkzeugkoordinatensystem KT und Flanschkoordinatensystem KF, dessen Koordinatenachsen $X_F$, $Y_F$, $Z_F$ der Übersichtlichkeit halber nicht eingezeichnet sind, liegt die Tranformationsmatrix TTF.

Die kinematische Kette schließt sich damit roboterseitig vom Werkzeugkoordinatensystem KT über TTF ins Flanschkoordinatensystem KF, über die zeitvariante Transformationsmatrix TFR ins Roboterkoordinatensystem KR sowie über TRW ins Weltkoordinatensystem KW und auf der anderen Seite vom Werkzeugkoordinatensystem KT über die Interpolationsmatrix VI ins Basiskoordinatensystem KB und über TBW ins Weltkoordinatensystem:

$$TBW * VI = TRW * TFR * TTF \qquad (1)$$

Um hieraus die benötigte Achswinkelstellung zu berechnen, ist die Gleichung (1) nach

$$TFR = TRW^{-1} * TBW * VI * TTF^{-1} \qquad (2)$$

aufzulösen und mit der bekannten Roboterkoordinatentransformation aus TFR die Achswinkelstellung zu ermitteln.

Durch dieses System wird bereits eine größere Flexibilität bezüglich des verwendeten Werkzeugs, sowie des Aufstellortes von Roboter und Werkstück erreicht. Wird nämlich ein anderes Werkzeug verwendet, so muß lediglich in der Robotersteuerung die Transformationsmatrix TTF von der Werkzeugspitze bzw. dem Werkzeugmittelpunkt ins Roboterflansch-Koordinatensystem KF neu berechnet werden.

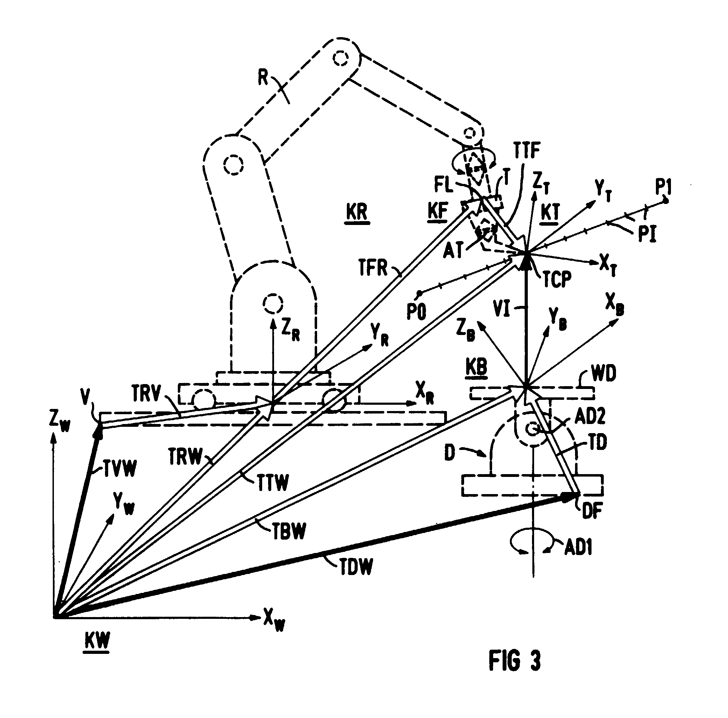

Anhand von FIG 3 wird nun gezeigt, wie anstelle von festen Beziehungen zwischen Roboter- KR und Weltkoordinatensystem KW, Basis- KB und Weltkoordinatensystem KW, sowie Werkzeug-KT und Flanschkoordinatensystem KF beliebig bewegliche kinematische Systeme in die geschlossene kinematische Kette eingebunden werden können.

FIG 3 zeigt den bereits aus den Figuren 1 und 2 bekannten Roboter R. Der Roboter ist jetzt auf einem Verfahrwagen V montiert. Außerdem weist er im Unterschied zum bisher beschriebenen Roboter ein über eine Drehachse AT bewegliches Werkzeug T auf. Der Roboter R ist gegenüber einen Werkstücktisch D angeordnet. Roboter R, Verfahrwagen V, Werkzeug T und Tisch D sind der Übersichtlichkeit halber gestrichelt dargestellt. Diese Art der Darstellung soll auch symbolisieren, daß es bei dem im folgenden zu beschreibenden Verfahren nicht auf die spezielle Ausbildung der beweglichen Systeme R, D, V, T ankommt.

Der Tisch weist eine Drehachse AD1 sowie eine Schwenkachse AD2 auf, mit denen die Tischplatte WD gedreht und geschwenkt werden kann. Auf der Tischplatte WD ist das bereits in FIG 2 eingeführte Basiskoordinatensystem KB mit den Koordinatenachsen $X_B$, $Y_B$, $Z_B$ definiert, dessen Ursprung im Ausführungsbeispiel mit der Mitte der Tischplatte WD zusammenfällt - das Basiskoordinatensystem KB kann aber auch an jeden anderen Ort der Tischplatte WD gelegt werden. Bezüglich des Basiskoordinatensystems KB ist die vom Roboterwerkzeug abzufahrende Bahn PO bis P1 definiert. Sie wird mit der Interpolationsmatrix VI beschrieben.

Die Position und Orientierung des Werkstücktisches D im Weltkoordinatensystem KW ist durch eine zeitinvariante Transformationsmatrix TDW von einem in einem signifikanten Punkt, dem Fußpunkt DF am Fuße des Werkzeugtisches D liegenden Koordinatensystem in das Weltkoordinatensystem KW beschrieben. Die Stellung des Werkstücktisches D vom Basiskoordinatensystem KB zu dem in DF liegenden Koordinatensystem ist durch die zeitvariante Transformationsmatrix TD beschrieben. Die Zeitvarianz ergibt sich durch die Bewegung der Achse AD1 und AD2. Die Umrechnung der Achswinkelstellungen in die Transformationsmatrix und umgekehrt kann mit einer dieser Kinematik entsprechenden Koordinatentransformation erfolgen. Die Matrixmultiplikation TDW * TD ergibt die zeitvariante Transformationsmatrix TBW, mit der Lage und Orientierung des Basiskoordinatensystems KB im Weltkoordinatensystem KW beschrieben werden.

Die zeitvariante Transformationsmatrix TTW vom Werkzeugkoordinatensystem KT in das Weltkoordinatensystem KW setzt sich zusammen aus der zeitvarianten Transformationsmatrix TTF von dem in der Werkzeugspitze TCP liegenden Werkzeugkoordinatensystem KT zum Flanschkoordinatensystem KF, der zeitvarianten Tranformationsmatrix TFR vom Flanschkoordinatensystem KF zum Roboterkoordinatensystem KR und der zeitvarianten Transformationsmatrix TRW vom Roboterkoordinatensystem zum Weltkoordinatensystem KW. Die letztgenannte Transformationsmatrix TRW ergibt sich aus der zeitvarianten Transformationsmatrix TRV vom Roboterkoordinatensystem KR zu dem in einem signifikanten Punkt der Verfahreinrichtung V liegenden Koordinatensystem und der Transformationsmatrix TVW von diesem Koordinatensystem in das Weltkoordinatensystem KW.

Die kinematische Kette zu den Punkten P0 bis P1 der Bahn wird dann werkstückseitig durch die bahnpunktbeschreibende Interpolationsmatrix VI und die Transformationsmatrix TBW beschrieben. Werkzeugseitig wird sie durch TTW beschrieben.

Entscheidend ist, daß für jedes kinematische System R, D, V, T steuerungstechnisch eine eigenständige Zuordnung erfolgt. Dies soll im folgenden noch weiter verdeutlicht werden.

Die gewünschte Bewegung des Werkzeugtisches WD wird in einem eigens dafür vorgesehenen Steuerungsteil oder sogar außerhalb der eigentlichen Steuerung interpoliert. Dort wird mit einer eigenen, zu dieser Kinematik gehörigen Koordinatentransformation die aus dieser Bewegung resultierende zeitvariante Transformationsmatrix TD berechnet. TD wird dann in jedem Takt einer für die kinematische Kettung zuständigen übergeordneten Steuerungseinheit zur Verfügung gestellt.

Unabhängig davon können in weiteren getrennten Steuerungseinheiten die Bewegungen weiterer kinematischer Systeme, beispielsweise des Verfahrwagens V oder des beweglichen Werkzeugs T interpoliert und deren Transformationsmatrix TRV bzw. TTF analog zu der Verfahrensweise mit dem Tisch berechnet und der übergeordneten Steuerungseinheit bereitgestellt werden.

Soll nun das Werkzeug die bereits in FIG 1 beschriebene Bahn P0 bis P 1 bezogen auf das Basiskoordinatensystem abfahren, so ist die mit Gleichung (1) definierte geschlossene kinematische Kette zu erfüllen. D. h. eine Kinematik dieser Kette muß so bewegt werden, daß die Gleichung (1) erfüllt wird. Vorzugsweise ist dieses der Roboter R, da er in der Regel die notwendige Anzahl der Freiheitsgrade aufweist, um diese Gleichung zu erfüllen. D. h. Gleichung (1) ist nach Gleichung (2) aufzulösen und aus der hieraus resultierenden Transformationsmatrix TFR mit Hilfe der Roboterkoordinatentransformation die Achswinkelstellung zu berechnen, so daß sich der Roboter resultierend aus der Bewegung der anderen kinematischen Systeme D, V, T derart bewegt, daß das Werkzeug bezogen auf das Basiskoordinatensystem die gewünschte Bahn mit dem gewünschten Orientierungsverhalten abfährt.

Prinzipiell kann auch eine andere Kinematik dieser geschlossenen kinematischen Kette die Ausgleichsbewegung ausführen. Im Folgenden wird jedoch davon ausgegangen, daß hierfür der Roboter verwendet wird.

Es ist ersichtlich, daß der dem Roboter zugeordnete Steuerungsteil die spezielle kinematische Konstellation und explizite Achsstellung von Tisch T, Verfahrwagen V oder Werkzeug T in keiner Weise kennen muß und die speziellen Koordinatentranformation von allen Systemen getrennt sind. Es müssen lediglich in einer Steuerungseinheit die gewünschte Bahn und Orientierung des Werkzeugs bezogen auf das Basiskoordinatensystem interpoliert werden und in der für die kinematische Kettung zuständigen Steuerungseinheit die geschlossene kinematische Kette mit den zeitvarianten Transformationsmatrizen, die von den Steuerungseinheiten der anderen kinematischen Systeme bereitgestellt sind, in jedem Takt mit Gleichung (2) nach TFR aufgelöst werden, um hieraus die Achswinkelstellung des Roboters zu ermitteln.

An dieser Stelle wird auch die Allgemeinheit des Verfahrens deutlich. Wenn nämlich beispielsweise in der kinematischen Kette TD, TDW, noch weitere Achsen vorhanden wären, beispielsweise dadurch, daß der Werkstücktisch T im Raum noch verfahrbar angeordnet wäre, so müßte dies lediglich durch eine weitere Transformationsmatrix beschrieben werden. Die zeitinvariante Transformationsmatrix TDW würde dann in eine zeitvariante Transformationsmatrix überführt werden.

Auch in diesem Fall bleibt der dem Roboter zugeordnete Steuerungsteil davon unberührt.

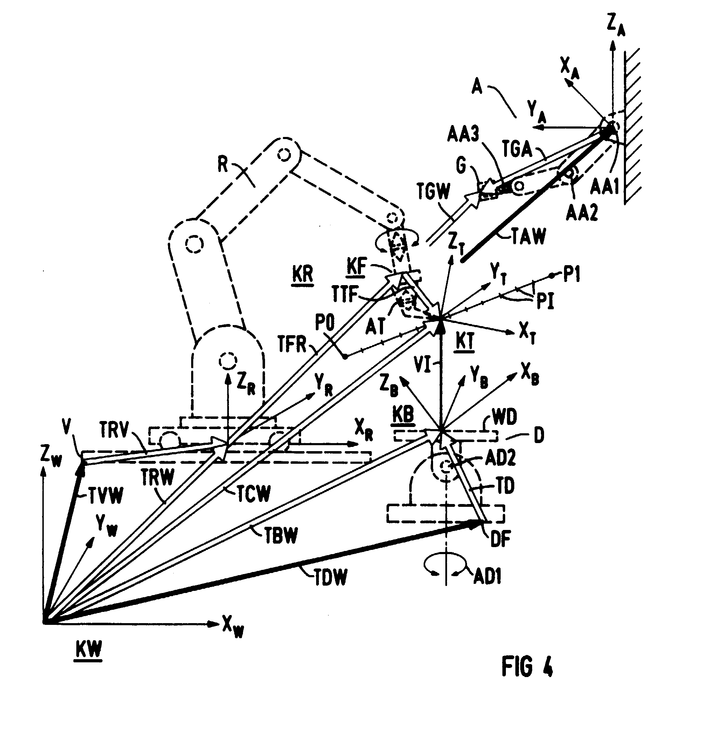

In FIG 4 ist zusätzlich zu den bereits aus FIG 3 bekannten kinematischen Systemen R, D, V, T noch ein fünftes kinematisches System A dargestellt. Es besteht aus einem dreiachsigen Roboterarm, der an einer Wand befestigt ist. Dieses kinematische System verfügt über zwei Schwenkachsen AA1, AA2, eine Drehachse AA3 und einen Greifer G. Die erste Schwenkachse liegt im Ursprung des Armkoordinatensystems KA mit den Koordinatenachsen $X_A$, $Y_A$, $Z_A$. Auf die bekannte Weise kann der Greifer G über die Transformationsmatrizen TAW und TGA bezüglich des Weltkoordinatensystems KW beschrieben werden:

$$TGW = TAW * TGA \qquad (3)$$

In einem Steuerungsprogramm können die Kinematik des Arms A und die Kinematik des Tisches D auch alternierend in die geschlossene kinematische Kette einbezogen werden. Wenn beispielsweise der Arm A dem Roboter R jeweils ein Bauelement überreichen soll und der Roboter dieses Bauelement auf den Punkten PI der linearen Bahn von P0 bis P1 ablegen soll, so kann die jeweils gewünschte Relativbewegung durch Einfügen der Transformationsmatrix TBW oder der Transformationsmatrix TGW in die geschlossene kinematische Kette geschehen. Durch die Bewegung des Armes A konnte das Bauteil dann immer in die Nähe des Roboterwerkzeugs gebracht werden, so daß bei der Übernahme des Bauteils vom Roboter nur ein relativ kurzer Weg zurückzulegen wäre. Es ist auch denkbar, einen zweiten oder weitere Tische D im Arbeitsbereich des Roboters zu positionieren und diese jeweils abwechselnd in die Steuerung einzubinden. Die Interpolationsmatrix VI des Werkzeugkoordinatensystems bezieht sich dann immer auf das Endkoordinatensystem des momentan in der geschlossenen kinematischen Kette befindlichen Tisches, um die gewünschte Relativbewegung zwischen Werkzeug und Werkstück zu erzielen. Auf diese Weise kann das auf einem "freien" Tisch befindliche Werkstück gewechselt werden oder es können andere Bedienhandlungen vorgenommen werden, während der Roboter das auf einem anderen Tisch befindliche Werkstück bearbeitet.

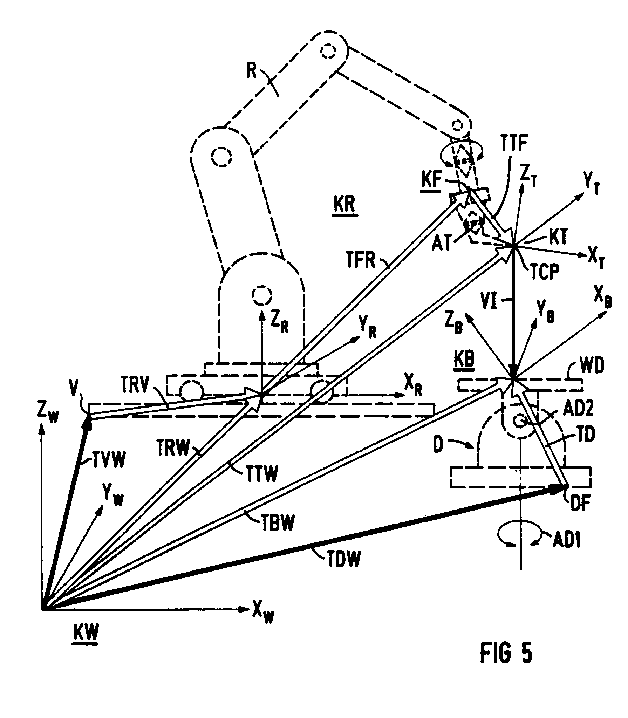

Anhand von FIG 5 soll nun ein weiteres vorteilhaftes Anwendungsbeispiel erläutert werden. Durch die allgemeine, voneinander unabhängige Beschreibung der kinematischen Systeme ist auf einfache Weise auch eine greiferbezogene Interpolation möglich. Das bedeutet, daß nicht die Bahn des Werkzeugkoordinatensystems KT im Basiskoordinatensystem KB beschrieben wird, sondern umgekehrt. In FIG 5 ist dieses durch Umkehrung der Interpolationsmatrix VI skizziert. Die kinematische Kette schließt sich hiermit zu:

$$TVW * TRV * TFR * TTF * VI = \qquad (4)$$

$$TTW * VI = TBW = \qquad (5)$$

$$TDW * TD \qquad (6)$$

Steuerungstechnisch wird das Problem direkt analog zu dem oben beschriebenen Verfahren gelöst. Die greiferbezogene Interpolation wird beispielsweise dann angewendet, wenn ein Werkzeug, beispielsweise ein Schweißbrenner, auf dem Werkstücktisch WD und das Werkstück am Roboter R befestigt ist.

Der Roboter fährt dann nicht die Bahn mit seinem Werkzeug ab, sondern bewegt das Werkstück über den Schweißbrenner, wobei der Schweißbrenner mittels des beweglichen Werktisches WD seine Stellung verändern kann, so daß auch an sonst weniger gut zugänglichen Stellen optimal geschweißt werden kann. Die Führung des Werkstücks durch den Roboter ist bei dieser Anwendung vorteilhaft, weil dadurch erreicht werden kann, daß die Schweißnaht immer in der gleichen, technologisch vorgegebenen Neigung zum Schweißbrenner geführt werden kann.

## Patentansprüche

1. Verfahren zur numerischen Steuerung von mehrachsigen kinematischen Systemen (R,D,V,T,A) mit folgenden Merkmalen:

    1.1 jedes kinematische System weist ein End- (KF,KB,KR,KT) und ein Anfangskoordinatensystem (KR) auf und ist hierzwischen durch eine zeitvariante Transformationsmatrix (TFR, TD, TV, TTF, TGA) zu jedem Taktzeitpunkt der numerischen Steuerung beschreibbar,

    1.2 hintereinanderliegende kinematische Systeme können zu einer kinematischen Kette gekoppelt werden wobei, eine kinematische Kette durch die Transformationsmatrix (TTW, TBW) von End- (KT, KB) zu Anfangskoordinatensystem (KW) dieser Kette, die sich aus der mathematischen Verknüpfung der Transformationsmatrizen der hintereinanderliegenden kinematischen Systeme dieser Kette ergibt, zu jedem Taktzeitpunkt einer numerischen Steuerung beschreibbar ist,

    1.3 alle kinematischen Ketten beziehen sich auf ein gemeinsames Weltkoordinatensystem (KW),

    1.4 bezüglich eines Endkoordinatensystems (KB) einer zweiten kinematischen Kette wird eine beliebige räumliche Bahn (V0,..VI,..V1) bestehend aus Position und Orientierung definiert, die vom Endkoordinatensystem (KT) einer ersten kinematischen Kette, abgefahren wird, wobei die definierte Bahn, sowie erste und zweite kinematische Kette gemeinsam eine geschlossene kinematische Kette bilden,

    1.5 bis auf ein kinematisches System dieser geschlossenen kinematischen Kette werden alle anderen unabhängig voneinander bewegt, während das übrige kinematische System, mit der notwendigen Anzahl von Freiheitsgraden, derart bewegt wird, daß die definierte Bahn des Endkoordinatensystems der ersten kinematischen Kette bezogen auf das Endkoordinatensystem der zweiten kinematischen Kette in jedem Taktzeitpunkt der numerischen Steuerung eingehalten wird.

2. Verfahren nach Anspruch 1, wobei

    2.1 die erste kinematische Kette aus einem mehrachsigen Roboter (R) gebildet wird, der als kinematisches System durch eine zeitvariante Transformationsmatrix (TFR) vom Roboterflansch- (KF) zum im Roboterfußpunkt liegenden Roboterkoordinatensystem (KR) in jedem Taktzeitpunkt einer numerischen Steuerung beschreibbar ist, wobei

        2.1.1 Lage und Orientierung des Roboterkoordinatensystems (KR) zum Weltkoordinatensystem (KW) durch eine zeitinvariante Transformationsmatrix (TRW) beschreibbar ist,
        2.1.2 ein starres Werkzeug sich am Roboterflansch befindet, dessen im Werkzeugeingriffspunkt (TCP) liegendes Werkzeugkoordinatensystem (KT) im Roboterflanschkoordinatensystem (KF) durch eine zeitinvariante Transformationsmatrix (TTF) beschreibbar ist,
        2.1.3 das Werkzeugkoordinatensystem (KT) das Endkoordinatensystem dieser ersten kinematischen Kette bildet,

    2.2 die zweite kinematische Kette aus einem ein- oder mehrachsigen kinematischen System (D) gebildet wird, wobei

        2.2.1 dem kinematischen System (D) ein Basiskoordinatensystem (KB) zugeordnet ist, welches das Endkoordinatensystem dieses kinematischen Systems und der zweiten kinematischen Kette bildet und das im Weltkoordinatensystem durch eine zeitvariante Transformationsmatrix (TBW) in jedem Taktzeitpunkt einer numerischen Steuerung beschreibbar ist,
        2.2.2 die räumliche Bahn als Lage und Orientierung des Werkzeugkoordinatensystems im Basiskoordinatensystem definiert ist.

3. Verfahren nach Anspruch 2, wobei das am Roboterflansch befindliche Werkzeug aus einem ein- oder mehrachsigen kinematischen System (T) gebildet wird und Lage und Orientierung des Werkzeugkoordinatensystems (KT) im Roboterflanschkoordinatensystem zu jedem Taktzeitpunkt der numerischen Steuerung durch eine zeitvariante Transformationsmatrix (TTF) beschreibbar ist.

4. Verfahren nach Anspruch 2 und 3, wobei sich der Roboter auf einem ein- oder mehrachsigen kinematischen System (V) befindet und Lage und Orientierung des Roboterkoordinatensystems (KR) im Weltkoordinatensystem zu jedem Taktzeitpunkt der numerischen Steuerung durch eine zeitvariante Transformationsmatrix (TRW) beschreibbar ist.

5. Verfahren nach einem der vorstehenden Ansprüche, wobei weitere kinematische Ketten, die jeweils aus ein oder mehreren kinematischen Systemen (A) bestehen, alternierend anstelle der zweiten kinematischen Kette in die geschlossene kinematische Kette eingebunden wird, wobei die zu interpolierende Bahn sich vom Werkzeugkoordinatensystem der ersten kinematischen Kette auf das Endkoordinatensystem der neu eingebundenen zweiten kinematischen Kette bezieht.

6. Verfahren nach einem der vorstehenden Ansprüche, wobei die zu interpolierende Bahn definiert ist als Lage und Orientierung des Endkoordinatensystem der zweiten kinematischen Kette im Endkoordinatensystem der ersten kinematischen Kette.

**Claims**

1. Method for the numerical control of multi-axis kinematic systems (R,D,V,T,A) having the following features:

   1.1 each kinematic system has an end coordinate system (KF,KB,KR,KT) and a start coordinate system (KR) and can be written between them by means of a time-variant transformation matrix (TFR, TD, TV, TTF, TGA) at every clock instant of the numerical control,
   1.2 kinematic systems which lie in series can be coupled to form a kinematic chain, whereby a kinematic chain can be written by means of the transformation matrix (TTW, TBW) from the end coordinate system (KT, KB) to the start coordinate system (KW) of this chain at every clock instant of a numerical control, which chain is produced from the mathematical linking of the transformation matrices of the kinematic systems of this chain which lie in series,
   1.3 all kinematic chains relate to a common world coordinate system (KW),
   1.4 with regard to an end coordinate system (KB) of a second kinematic chain an arbitrary spatial path (VO,..VI,..V1) comprising position and orientation is defined, which is started from the end coordinate system (KT) of a first kinematic chain, whereby the defined path and the first and second kinematic chain together form a closed kinematic chain,
1.5 apart from a kinematic system of this closed kinematic chain, all others are moved independently of each other, while the remaining kinematic system, with the necessary number of degrees of freedom, is moved in such a way that the defined path of the end coordinate system of the first kinematic chain in relation to the end coordinate system of the second kinematic chain is maintained at each clock instant of the numerical control.

2. Method according to claim 1, whereby

   2.1 the first kinematic chain is formed from a multi-axis robot (R) which can be written as kinematic system at every clock instant of a numerical control by means of a time-variant transformation matrix (TFR) from the robot flange point (KF) to the robot coordinate system (KR) lying at the robot base point, whereby

      2.1.1 the position and orientation of the robot coordinate system (KR) with respect to the world coordinate system (KW) can be written by means of a time-invariant transformation matrix (TRW),
      2.1.2 a rigid tool is located on the robot flange, the tool coordinate system (KT) of which, lying at the point of tool engagement (TCP), can be written in the robot flange coordinate system (KF) by means of a time-invariant transformation matrix (TTF),
      2.1.3 the tool coordinate system (KT) forms the end coordinate system of this first kinematic chain,

   2.2 the second kinematic chain is formed from a single-axis or multi-axis kinematic system (D), whereby

      2.2.1 the kinematic system (D) is allocated a base coordinate system (KB), which forms the end coordinate system of this kinematic system and of the second kinematic chain and which can be written in the world coordinate system by means of a time-variant transformation matrix (TBW) at every clock instant of a numerical control,
      2.2.2 the spatial path is defined as position and orientation of the tool coordinate sys-

**3.** Method according to claim 2, whereby the tool located at the robot flange is formed from a single-axis or multi-axis kinematic system (T) and the position and orientation of the tool coordinate system (KT) in the robot flange coordinate system can be written at every clock instant of the numerical control by means of a time-variant transformation matrix (TTF).

**4.** Method according to claim 2 and 3, whereby the robot is located on a single-axis or multi-axis kinematic system (V) and the position and orientation of the robot coordinate system (KR) in the world coordinate system can be written at every clock instant of the numerical control by means of a time-variant transformation matrix (TRW).

**5.** Method according to one of the above claims, whereby additional kinematic chains, each of which comprises one or more kinematic systems (A), are interconnected alternately in place of the second kinematic chain into the closed kinematic chain, whereby the path to be interpolated applies from the tool coordinate system of the first kinematic chain to the end coordinate system of the newly interconnected second kinematic chain.

**6.** Method according to one of the above claims, whereby the path to be interpolated is defined as position and orientation of the end coordinate system of the second kinematic chain in the end coordinate system of the first kinematic chain.

**Revendications**

**1.** Procédé de commande numérique de systèmes (R, D,V,T,A) cinématiques à plusieurs axes ayant les caractéristiques suivantes :

1.1 chaque système cinématique comporte un système (KF,KB,KR,KT) de coordonnées finales et un système (KR) de coordonnées initiales et peut, à chaque instant du cycle de la commande numérique, être décrit entre les deux par une matrice (TFR,TD,TV,TTF,TGA) de transformation qui varie en fonction du temps,
1.2 des systèmes cinématiques se trouvant les uns derrière les autres peuvent être couplés en une chaîne cinématique, une chaîne cinématique pouvant, à chaque instant du cycle d'une commande numérique, être décrite par la matrice (TTW, TBW) de transformation du système (KT,KB) de coordonnées finales en le système (KW) de coordonnées initiales de cette chaîne, qui s'obtient à partir de la combinaison mathématique des matrices de transformation des systèmes cinématiques de cette chaîne placés les uns derrière les autres,
1.3 toutes les chaînes cinématiques se rapportent à un système (KW) de coordonnées universelles,
1.4 il est défini par rapport à un système (KB) de coordonnées finales d'une deuxième chaîne cinématique une voie (VO,...VI,....V1) quelconque dans l'espace, qui est constituée d'une position et d'une orientation et qui est parcourue par le système (KT) de coordonnées finales d'une première chaîne cinématique, la voie définie, ainsi que la première chaîne cinématique et la deuxième chaîne cinématique, formant conjointement une chaîne cinématique fermée,
1.5 à l'exception d'un système cinématique de cette chaîne cinématique fermée, tous les autres systèmes cinématiques sont déplacés indépendamment les uns des autres, tandis que le système cinématique restant, ayant le nombre nécessaire de degrés de liberté, est déplacé de manière à respecter, à chaque instant du cycle de la commande numérique, la voie définie du système de coordonnées finales de la première chaîne cinématique par rapport au système de coordonnées finales de la deuxième chaîne cinématique.

**2.** Procédé suivant la revendication 1,

2.1 la première chaîne cinématique étant formée par un robot (R) à plusieurs axes, qui, à chaque instant du cycle d'une commande numérique, peut être décrit comme système cinématique par une matrice (TFR) de transformation, qui varie en fonction du temps, du système (KF) de coordonnées de la bride du robot en le système (KR) de coordonnées du robot se trouvant à la base du robot,
2.1.1 la position et l'orientation du système (KR) de coordonnées du robot par rapport au système (KW) de coordonnées universelles pouvant être décrites par une matrice (TRW) de transformation qui ne varie pas en fonction du temps,
2.1.2 il se trouve sur la bride du robot un outil fixe, dont le système (KT) de coordonnées d'outil, se trouvant au point (TCP), d'intervention de l'outil peut être décrit dans le système (KF) de coordonnées de la bride du robot par une matrice (TTF) de transformation qui ne varie pas dans le temps,
2.1.3 le système (KT) de coordonnées de l'outil forme le système de coordonnées finales de cette première chaîne cinématique,
2.2 la deuxième chaîne cinématique est formée par un système (D) cinématique à un axe ou à plusieurs axes,

2.2.1 un système (KB) de coordonnées de base, qui forme le système de coordonnées finales du système (D) cinématique et de la deuxième chaîne cinématique et qui, à chaque instant du cycle d'une commande numérique, peut être décrit dans le système de coordonnées universelles par une matrice (TBW) de transformation qui varie en fonction du temps, étant associée au système (D) cinématique,

2.2.2 la voie dans l'espace étant définie comme position et orientation du système de coordonnées de l'outil dans le système de coordonnées de base.

3. Procédé suivant la revendication 2, l'outil se trouvant à la bride du robot étant formé par un système (T) cinématique à un axe ou à plusieurs axes et la position et l'orientation du système (KT) de coordonnées de l'outil dans le système de coordonnées du robot pouvant, à chaque instant du cycle de la commande numérique, être décrites par une matrice (TTF) de transformation qui varie en fonction du temps.

4. Procédé suivant la revendication 2 et 3, le robot se trouvant sur un système (V) cinématique à un axe ou à plusieurs axes et la position et l'orientation du système (KR) de coordonnées de robot dans le système de coordonnées universelles pouvant, à chaque instant du cycle de la commande numérique, être décrites par une matrice (TRW) de transformation qui varie en fonction du temps.

5. Procédé suivant l'une des revendications précédentes, des chaînes cinématiques supplémentaires, qui consistent chacune en un système cinématique ou en plusieurs systèmes (A) cinématiques, étant intégrées alternativement à la chaîne cinématique fermée à la place de la deuxième chaîne cinématique, la voie à interpoler se rapportant du système de coordonnées de l'outil de la première chaîne cinématique au système de coordonnées finales de la deuxième chaîne cinématique nouvellement intégrée.

6. Procédé suivant l'une des revendications précédentes, la voie à interpoler étant définie comme position et orientation du système de coordonnées finales de la deuxième chaîne cinématique dans le système de coordonnées finales de la première chaîne cinématique.

FIG 1

FIG 2

FIG 3

FIG 4

FIG 5